# EUROPEAN PATENT APPLICATION

(11) **EP 1 335 171 A1**
(43) Date of publication of application: **13.08.2003**
(21) Application number: 02022383.0
(22) Date of filing: 09.10.2002
(51) Int. Cl.: F25D 23/06

(54) **Domestic refrigerator and procedure for producing the same**

(30) Priority: 07.02.2002 IT VA20020011
(71) Applicant: WHIRLPOOL CORPORATION, Benton Harbor Michigan 49022 (US)
(72) Inventor: Casoli, Fiorenzo, V.le G. Borghi 27, 21025 Comerio (IT); Martinella, Luigi, V.le G. Borghi 27, 21025 Comerio (IT); Piloni, Mauro, V.le G. Borghi 27, 21025 Comerio (IT); Caprioli, Giulio, V.le G. Borghi 27, 21025 Comerio (IT); Giudici, Giorgio, V.le G. Borghi 27, 21025 Comerio (IT)
(74) Representative: Guerci, Alessandro

(57) **Abstract**

A domestic refrigerator comprises a compartment (V) for preserving foodstuffs, delimited by insulated walls (12a, 12b, 12c) provided with an air space (K) suitable for being connected to a vacuum source. The air space (K) contains expanded insulating material (20) which has conduits (C, F, C') for facilitating the evacuation of the air space (K).

## Description

The present invention concerns a domestic refrigerator, of the type comprising a compartment for preserving foodstuffs, delimited by insulated walls provided with an air space that can be connected to an evacuation device and containing expanded insulating material suitable for preventing the collapse of the air space owing to the effect of the vacuum.

The term refrigerator here refers to any electrical appliance for preserving foodstuffs in which the internal temperature is kept below ambient temperature; this definition includes both refrigerator cabinets proper, and upright or chest freezers and the various combinations thereof.

The difficulty of producing satisfactory evacuation of the air space is well known in the sector of refrigerators of the above type. In fact even if, for example, open-cell polyurethane foam or open-cell expanded polystyrene panels are used as an insulating material, the losses of pressure in the flow of gas towards the vacuum pump are not negligible, and impede the achievement of the desired degree of vacuum (of the order of 0.5 to 1 millibars) or require too much time to achieve a complete evacuation.

An aim of the present invention is to provide a domestic refrigerator of the aforementioned type that makes it possible to resolve the aforementioned problem in a simple and economic manner. This aim is achieved by means of the characteristics mentioned in the attached claims.

Another aim of the present invention is that of providing a solution for refrigerators of the aforementioned type that makes it possible to fix the internal components of the refrigerator, to ensure that they are positioned stably. In fact, it is known that it is not possible to make holes in the structure since these would prejudice the maintenance of the vacuum. Therefore, the vacuum- or thermoforming of the inner shell to create guides and projections needs to be conceived differently in order not to create obstructions to the process of evacuating the insulating material.

The technical difficulties encountered to date in ensuring effective and rapid evacuation of the air space of the insulated walls of domestic refrigerators are overcome by a series of innovative arrangements. Prior to the evacuation of the insolating material contained in said air space, channels are made in said expanded material with suitable tools, for example with augers or punches, so that the axes of such holes are substantially parallel to the side walls of the refrigerator. In this way all the panels surrounding the inner liner walls have a plurality of holes suitable for facilitating the evacuation of the air space to the intake manifold, placed preferably in correspondence with the rear wall of the cell, the one facing the door for access to the preservation compartment. If panels of insulating material are used, said holes can be made during the process of producing the panels themselves. In another embodiment of the present invention, the vacuum- or thermoforming of the guides for metal rod racks, for glass shelves and for drawers, where appropriate, is performed by "negative" valleys or "positive" projections of the inner face (liner) of the cell, which also act as conduits for facilitating the evacuation of the air space. These methods for making channels can be used as an alternative to or in combination with the channels made directly by drilling the expanded material. In said second embodiment of the invention, before the introduction of the panels or sheets of expanded polymeric material into the air space or before filling the latter with foam, there are introduced into the conduits in the internal face of the cell (expanded material side) fillets of open-cell insulating material (rigid foam or fabric/nonwoven) with a porosity distinctly greater than that of the insulating expanded material introduced or injected subsequently into the air space. The depth of said conduits must ensure a good balance between the function of holding the racks and producing an effective evacuation channel that will make it possible to keep evacuation times low, and is preferably greater than 8 mm.

It is also well known that, in refrigerators with devices for evacuating the air space, the electric circuit is produced with electrical wires that are no longer made to pass in the insulating material in order to avoid problems during evacuation. In this case too, according to the invention use is made of "negative/positive" vacuum-formed channels which, apart from performing the function of containers for the electrical wires, facilitate the evacuation of the air space.

The solution according to the invention provides for a third embodiment in which one of the walls of the cell, and in particular its rear outer wall, has a particular shape in which, starting from the opening of the connection to the vacuum pump, a plurality of ray-like conduits are provided, which conduits are themselves capable of facilitating the evacuation of the air space and of ensuring better connection between any conduits made in correspondence with the side walls of the cell and the vacuum pump. Rather than making the ray-type conduits on the rear wall (the one facing the door of the cell), it is possible for reasons of structural convenience to make them in correspondence with the back wall, the one that normally delimits the space for the components of the refrigerating circuit (for example the compressor). The production of such ray-like conduits can be obtained by means of sealed mounting of a back panel in which said ray-like channels are made. Before mounting said panel and before the subsequent evacuation of the air space, one or more panels of insulating expanded material are introduced. Alternatively, the back panel can be integral with the outer shell of the cell.

Other advantages and characteristics of a refrigerator according to the invention and its production process will become apparent from the following detailed description, provided solely by way of non-exhaustive example, with reference to the attached drawings in which:
- Figure 1 is a diagrammatic perspective view of a refrigerator according to the invention, in partial section, from which the door and the inner shelves have been removed for the sake of clarity;
- Figure 2 illustrates a detail on a larger scale from Figure 1, according to a first embodiment;
- Figure 3 illustrates a detail on a larger scale from Figure 1, in accordance with a second embodiment;
- Figure 4 is a diagrammatic perspective view that illustrates a realised phase of the cell, with particular reference to its rear wall and to a third embodiment of the invention;
- Figure 5 is an exploded perspective view of a variant of a refrigerator according to the embodiment in Figure 4;
- Figure 6 is a front perspective view of the refrigerator in Figure 5;
- Figure 7 is a detail on a larger scale from Figure 6, which illustrates the joining system between inner shell and outer shell; and
- Figure 8 is a diagram that illustrates the drastic reduction in the times for evacuating the insulating air space in a refrigerator made according to the present invention.

With reference to the drawings, number 10 illustrates as a whole a cabinet or refrigerator cell comprising a compartment for preserving foodstuffs V closed off at the front by a door (not illustrated). The compartment V is delimited by side walls 12a, horizontal walls 12b (upper and lower), and by a rear back wall 12c. Each wall 12a, 12b, 12c is constituted by an inner shell 14 and an outer shell 16, preferably made of single-layer or multi-layer polymeric material so as to ensure a suitable mechanical resistance, suitable aesthetic appearance, controlled permeation of gases and vapours and to allow perfect welding between the two shells. The inner 14 and outer 16 shells can be made of sheet material, for example stainless steel (in this case the gas permeability is zero). In correspondence with the internal shell 14, in the compartment V there is mounted a plate-type evaporator E. The inner 14 and outer 16 shells are sealed together at the front at S, i.e. in correspondence with the opening giving access to the compartment V.

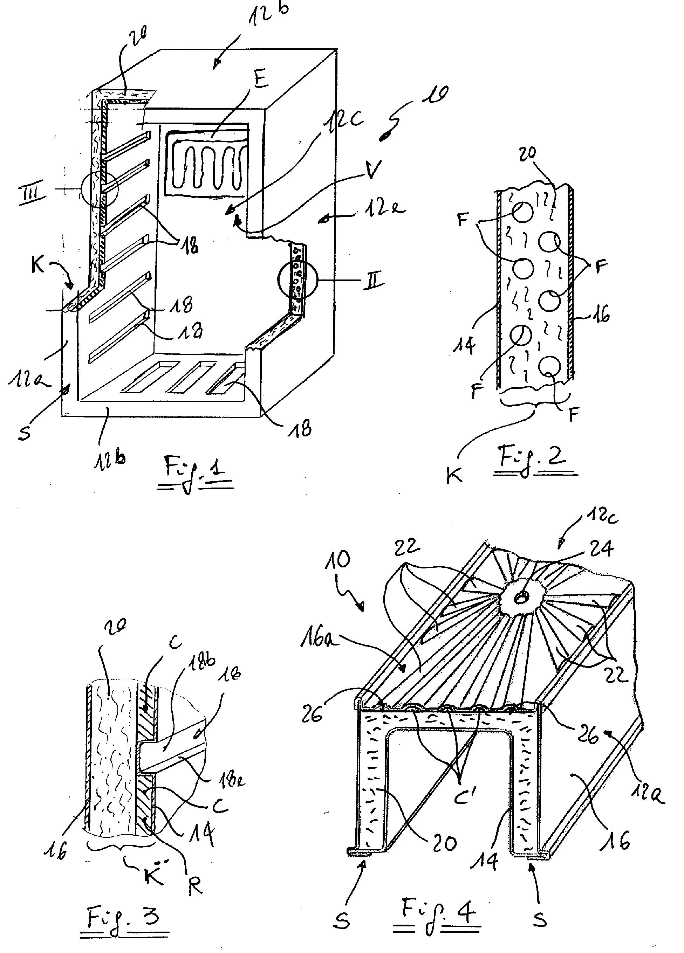

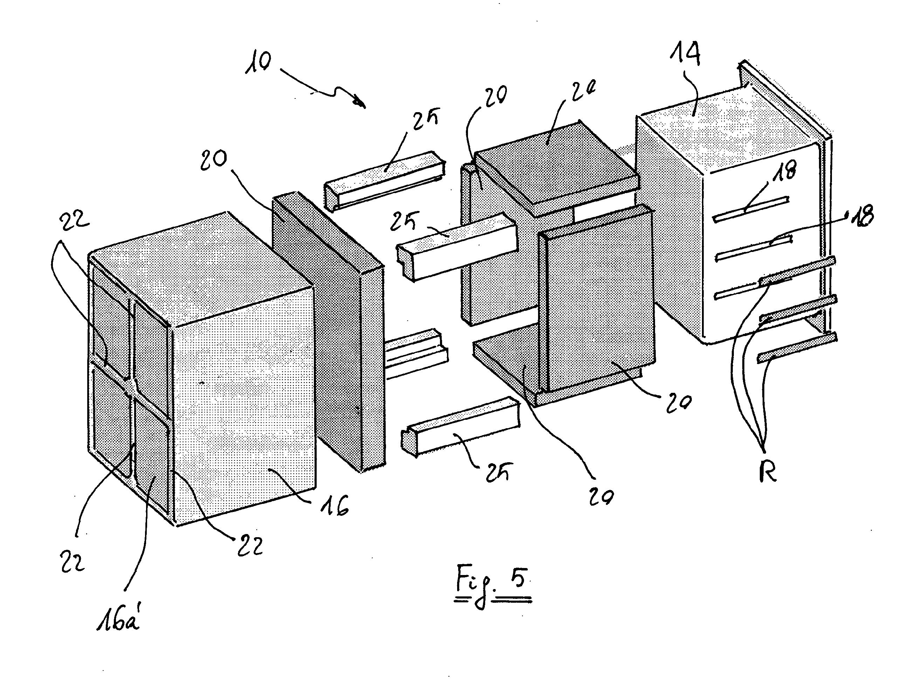

According to a first embodiment of the invention (Figure 2), in the air space K defined between the shells 14 and 16, panels or sheets of insulating porous material 20, for example, open-cell expanded polystyrene panels, are inserted in a manner known *per se.* As an alternative to the use of panels it is possible to inject open-cell polyurethane foam into the air space K, although the development of gas following the evacuation of the air space K can considerably reduce the degree of vacuum obtained, unless the evacuation operation is coupled with a marked heating of the expanded material to a temperature of the order of 100-200°C, with the consequent problems of dimensional stability of the cell (as a matter of fact inner and outer shell polymeric materials cannot usually withstand high temperatures, and therefore a metal cabinet would be necessary for a high heating temperature). In the insulating material a plurality of holes F are made by drilling, using rotating augers or punches. The holes or channels F start from the rear wall of the cell and lead to the areas farthest away from the area in which the pump for evacuating the air space K is connected, which pump is ideally placed centrally with respect to the rear wall 12c of the compartment V since this is the position that permits the shortest distance between the suction point and the most distant point in the cabinet. Naturally, the holes F, preferably between 3 and 10 mm in diameter and arranged at a centre distance of between 40 and 120 mm, can be made in the panels of insulating expanded material before they are introduced into the air space K, or can be made in the expanded material already inserted into said air space. This second alternative is "obligatory" where the insulating material is obtained by producing foam inside the air space.

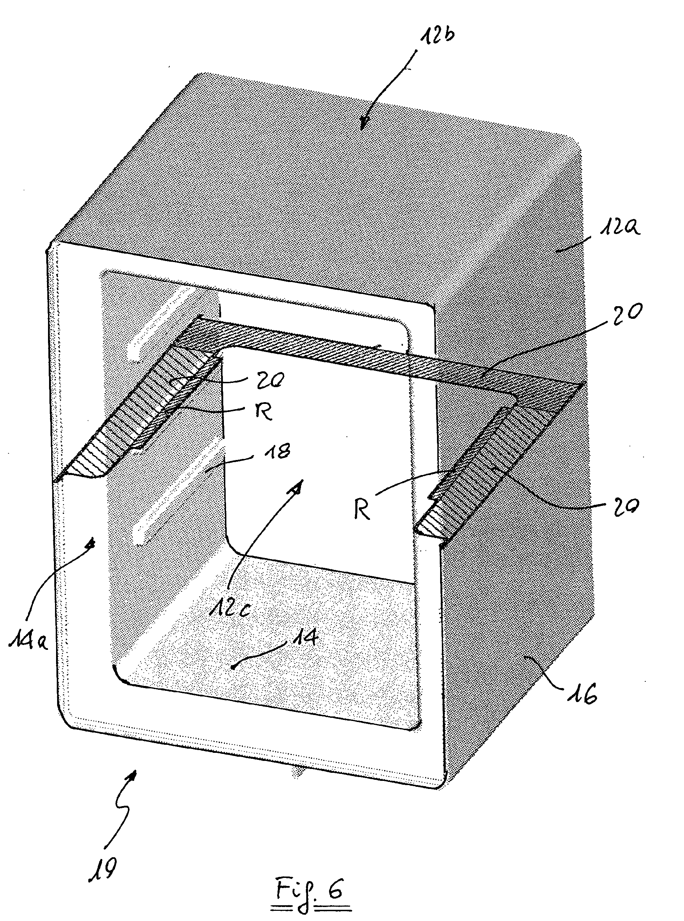

In another embodiment (Figure 3), the inner shell 14 has a plurality of grooves 18, preferably made by thermoforming or vacuum-forming, each having side walls 18a and a bottom wall 18b.

As clearly illustrated in Figure 3, between the inner shell 14 and the expanded insulating material 20 there are defined a plurality of channels C capable of facilitating the evacuation of the air space K by the vacuum pump (not illustrated). Before filing the refrigerator cabinet with foam or introducing the panels of expanded material into the air space K, the channels C (made between the valleys or between the projections of the inner shell 14) are filled with a rigid foam or with an open-cell nonwoven fabric, identified in the drawings with the reference R, having a greater porosity than expanded material 20 and having the purpose of defining the preferential evacuation channel C. The grooves 18 arranged in correspondence with the vertical side walls 12a are used for supporting the shelves or drawers (not illustrated) inside the compartment V. Where the compartment V is that of an upright freezer, the grooves 18 are advantageously used for supporting the grid-type portions of the evaporator and or the drawers in which the frozen foods are contained. The rigid foam or nonwoven fabric R can advantageously be impregnated with desiccant material (for example silica gel) in order to reduce the amount of water vapour present in the air space K. It is noted, in fact, that the permeability of the shells 14 and 16 to water vapour causes an undesired and rapid raising of the pressure inside the air space K.

The above-mentioned two embodiments of the invention can be combined together so as to produce a greater number of conduits in order to facilitate the evacuation of the air space K.

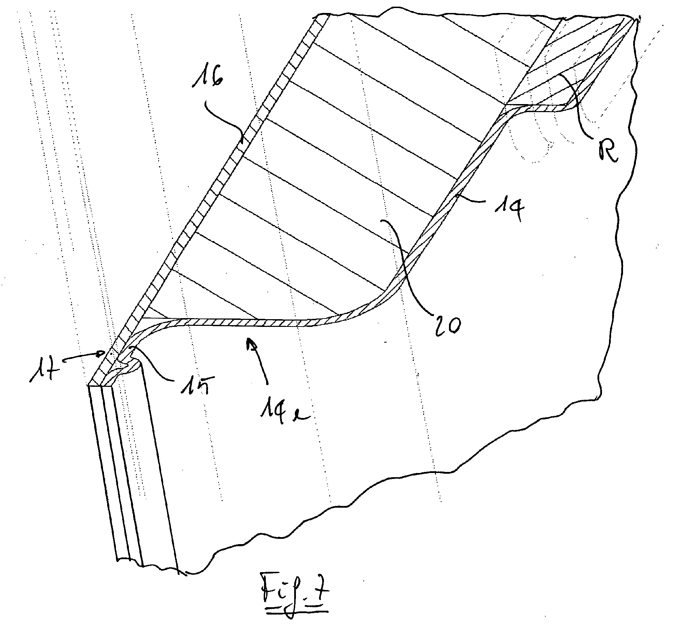

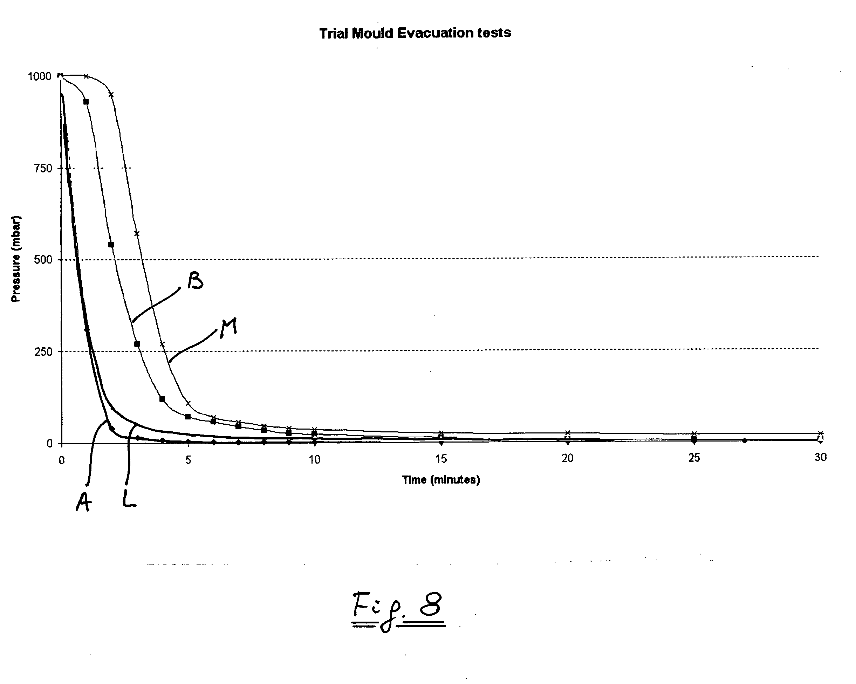

In a third embodiment of the invention (Figures 4 and 5), the conduits in the insulating material of the air space are made in correspondence with the rear wall of the compartment and branch out substantially in rays starting from the area of connection to the vacuum pump. In said last embodiment (Figure 4), the procedure for producing the cell provides for a rear wall 16a to be sealed to the side walls of the outer shell 16, said rear wall preferably being made of thermoformed polymeric material, provided with a plurality of grooves 22 that define, together with a flat surface 26 of the expanded material 20, a plurality of channels C' arranged like rays starting from an opening 24 for connection to a vacuum pump.

According to a variant illustrated in Figure 5, the rear wall 16a' of the cell is made integrally with the outer shell 16, eliminating the need to weld the rear outer face to said shell 16. Figure 5 also illustrates the diagram for mounting the cell, in which angular elements 25 are associated with the panels of expanded insulating material 20, said angular elements also being made of open-cell expanded material (for example expanded polystyrene), suitable for ensuring the continuing of the insulating material in correspondence with the corners of the cell. These angular elements can also be drilled longitudinally in the same way that the flat panels 20 can be.

Naturally, this last embodiment of the invention can advantageously be used in combination with one or both of the other two; in fact the conduits C' created by the grooves 22 on the outer shell 16a or 16a' are connected to the conduits made in the side walls (either by drilling or in correspondence with the inner guides) for better continuity of the passage of gas towards the opening 24 for connection to the vacuum pump. Furthermore, the first two embodiments can advantageously be combined together in order to increase the section of the conduits so as to facilitate the evacuation of the air space K. Since the rear wall of the refrigerator cell is not in sight, the presence of the ray-like valleys 22 does not create any aesthetic problem. For this reason the ray-like conduits can be made on the back wall of the cell or, particularly for built-in refrigerators, in correspondence with its upper wall.

Figure 6 and 7 illustrate a front joining system for the inner and outer shells, as an alternative to that illustrated in Figure 4. With particular reference to Figure 7, the inner shell 14 has a flange-like front portion 14a and having an edge 15 capable of being welded to a corresponding edge portion 17 of the outer shell 16.

It is intended that the refrigerator according to the invention can be either of the type in which the evacuation of the air space K is made just once during the manufacturing cycle, or of the type provided with a vacuum pump suitable for maintaining through time an optimal degree of vacuum for the purposes of insulation, or of the type in which the vacuum pump is substituted by a reservoir containing a material capable of adsorbing and/or reacting with the gas contained in the air space K (after the introduction of foam therein) in order to obtain the desired degree of vacuum therein, or - finally - of the type in which, in order to obtain the optimal degree of vacuum, there is both the vacuum pump and a reservoir containing a material suitable for adsorbing and/or reacting with the gas contained in the air space K (after the introduction of foam therein).

Tests carried out by the applicant (Figure 8) have demonstrated how the use of the technical solution according to the invention make it possible to achieve the desired degree of vacuum in a surprisingly short time, compatible with the usual production cycle times for the cell. In Figure 8, curve A refers to the degree of vacuum that can be achieved using polystyrene sheets provided with holes according to the invention (5 mm diameter holes), while curve B refers to the same sheet without holes. With the solution according to the invention a pressure of 1 mBar is reached in about 10 minutes while, with the sheet without holes, to reach the same degree of vacuum a good 70 minutes are required. In the same figure, the curves L and M refer to the evacuation times of the polyurethane foam, with and without holes respectively. As stated previously, in the case of polyurethane foam, the evacuation times at ambient temperature are considerably prolonged, particularly by the development of gas from the foam following evacuation. From laboratory measurements made by the applicant it can be seen that the presence of the holes F does not involve a measurable variation in the insulating capacity of the material 20.

## Claims

1. Domestic refrigerator comprising a compartment (V) for preserving foodstuffs, delimited by insulated walls (12a, 12b, 12c) provided with an air space (K) suitable for being connected to a vacuum source and containing expanded insulating material (20) **characterised by** the fact that, in the insulating material (20) of the air space (K), conduits (C, F, C') are provided for facilitating the evacuation of the air space (K).

2. Domestic refrigerator according to Claim 1, **characterised by** the fact that said channels are defined by holes (F) made in the insulating material (20) in correspondence with side walls (12a, 12b) of the compartment (V), said holes having axes substantially parallel to said side walls (12a, 12b).

3. Domestic refrigerator according to Claim 1, **characterised by** the fact that said conduits (C) are defined by valleys or reliefs (18) made on an inner surface (14) of the preservation compartment (V), said conduits being usable in order to support and/or contain functional elements of the refrigerator (10) such as horizontal shelves or horizontal portions of grid-like evaporator.

4. Domestic refrigerator according to Claim 3, **characterised by** the fact that said conduits (C) contain material (R) suitable for allowing the passage of gas when creating the vacuum inside the air space (K).

5. Domestic refrigerator according to Claim 4, **characterised by** the fact that said material (R) is preferably a rigid open-cell foam or a nonwoven textile.

6. Refrigerator according to Claim 5, **characterised by** the fact that the material (R) comprises a substance suitable for absorbing water vapour.

7. Domestic refrigerator according to Claim 1, **characterised by** the fact that the aforementioned conduits (C') are defined by valleys or reliefs (22) made on an outer surface (16a) of the preservation compartment (V), said valleys or reliefs (22) preferably being arranged like rays and converging towards an area (24) of connection to the vacuum source.

8. Domestic refrigerator according to Claim 7, **characterised by** the fact that said outer surface (16a') of the preservation compartment (V) is integral with an outer shell (16) of the cell.

9. Procedure for producing a domestic refrigerator provided with an air space (K) inside which is inserted or injected an expanded insulating material (20) and suitable for being connected to a vacuum source, **characterised by** the fact that, in the insulating material (20), a plurality of holes (F) are made, suitable for facilitating the evacuation of the air space (K).

10. Procedure for producing a domestic refrigerator provided with an air space (K) inside which is inserted or injected an expanded insulating material (20) and suitable for being connected to a vacuum source, said air space being delimited internally by a surface area (14) in which valleys (18) are made, which valleys are suitable for acting as supports for internal components of the refrigerator, **characterised by** the fact that it comprises the insertion into said valleys (18) of a porous material (R) suitable for permitting the easy evacuation of gas.
